(19) Europäisches Patentamt
European Patent Office
Office européen des brevets

(11) EP 2 113 793 A1

(12) EUROPEAN PATENT APPLICATION

(43) Date of publication:
04.11.2009 Bulletin 2009/45

(51) Int Cl.:
*G01V 1/28* (2006.01)　　　　*G06K 9/46* (2006.01)

(21) Application number: 08155475.0

(22) Date of filing: 30.04.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: ExxonMobil Upstream Research
Company
Houston, TX 77098-2189 (US)

(72) Inventor: **The designation of the inventor has not
yet been filed**

(74) Representative: **Pols, Ronald Maarten**
**ExxonMobil Chemical Europe Inc.**
**IP Law Shared Services**
**P.O. Box 105**
**Hermeslaan 2**
**1831 Machelen (BE)**

(54) **Detection of features in seismic images**

(57)　　A computer implemented method for the detection of features in seismic images comprising:
inputting a seismic image;
smoothing the input seismic image;
detecting edges in the smoothed seismic image;
projecting an intensity of the edges in a plurality of spatial directions;
determining a direction of maximum intensity of the projections of the edges; and
for the directions of maximum intensity defining a fault line in the seismic image.

Fig. 1A

**Fig. 1B**

**Description**

CROSS-REFERENCE TO RELATED APPLICATIONS

This application claims the benefit of U. S. Provisional Application No. 61/008,758 filed on December 21, 2007.

BACKGROUND OF THE INVENTION

This invention relates generally to oil and gas production, and in particular to the processing of seismic data to facilitate oil and gas production.

Existing interpretation of seismic data faces a number of significant challenges. First, undiscovered oil and gas reservoirs are often contained in subtle traps at very low depth or in stratigraphic traps that are difficult to detect in a single seismic volume. Second, the amount of seismic data and attributes that can now be obtained for each seismic volume typically far exceeds the interpretation capability of human interpreters. As a result, a number of methods have been developed for automatically processing seismic data to facilitate the interpretation of the seismic data.

For example, there are a number of existing methods for applying pattern recognition and data mining techniques to seismic data. However, many of the existing methods have been limited to pre-processing seismic images to remove noise and/or utilize horizon tracking using local classification methods. In other instances, the existing methods provide automatic identification of geological features by relying upon training neural networks and other similar classifiers. Such existing methods for identifying geological features in seismic data are indirect and lack transparency.

BRIEF DESCRIPTION OF THE DRAWINGS

Figs. 1a and 1b are flow chart representations of an exemplary embodiment of a method of determining the presence of a fault in a seismic image.

Fig. 2 is a graphical illustration of an exemplary embodiment of a seismic image.

Fig. 3 is a graphical illustration of the seismic image of Fig. 2 after smoothing the seismic image.

Fig. 4 is a graphical illustration of the seismic image of Fig. 3 after detecting the points of high radius of curvature in the smoothed seismic image.

Fig. 5 is a graphical illustration of a fault line in the image of Fig. 4.

Fig. 6 is a graphical illustration of Radon transforms performed on the image of Fig. 4.

Fig. 7 is a graphical illustration of the seismic image of Fig. 2 including a fault line.

Fig. 8 is a flow chart representation of an exemplary embodiment of a method of determining the presence of channels in a seismic image.

Fig. 9 is a graphical illustration of an exemplary embodiment of a seismic image.

Fig. 10 is a graphical illustration of the seismic image of Fig. 9 after smoothing the seismic image.

Fig. 11 is a graphical illustration of the smoothed seismic image of Fig. 10 after processing the image to determine channels in the image.

DETAILED DESCRIPTION OF THE ILLUSTRATIVE EMBODIMENTS

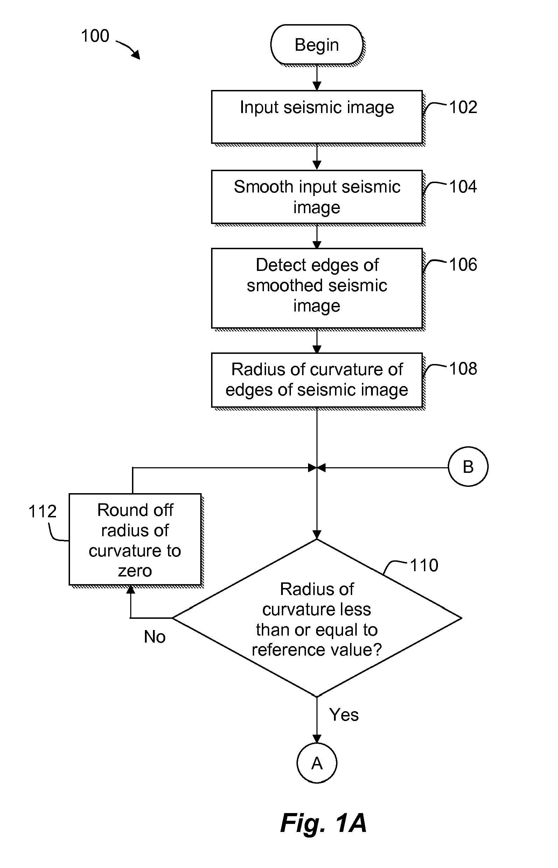

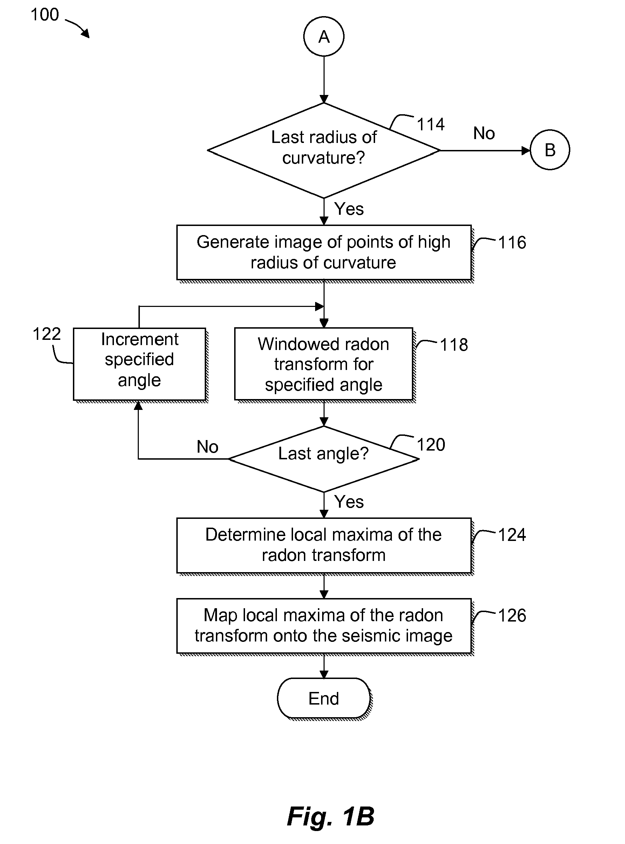

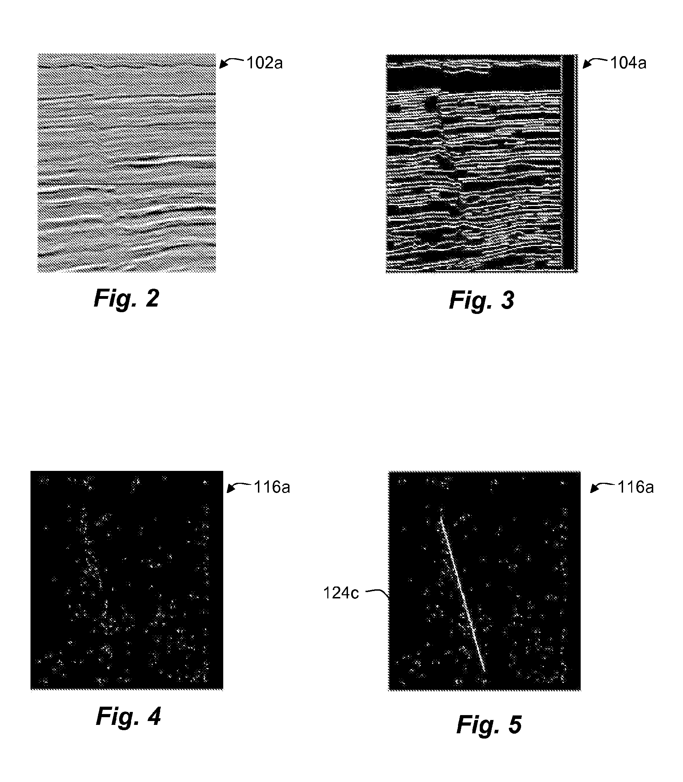

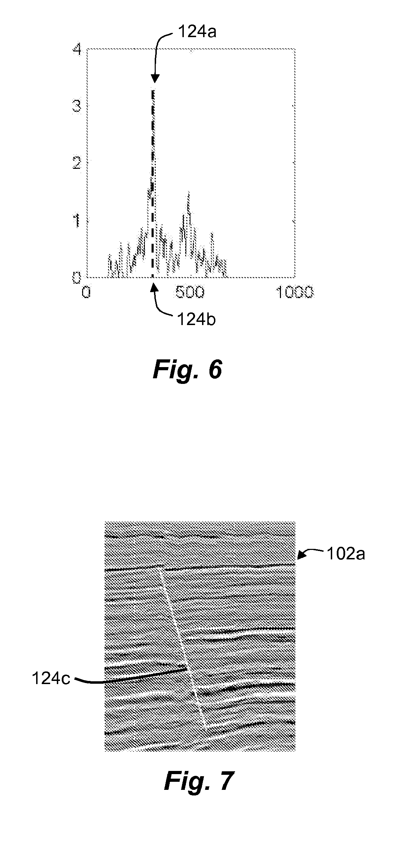

Referring to Figs. 1a, 1b, 2, 3, 4, 5, 6, and 7, an exemplary embodiment of a method **100** of detecting faults in seismic images is provided in which a seismic image **102a** is input in **102**. In an exemplary embodiment, the input seismic image **102a** is then smoothed in **104** to generate a smoothed seismic image **104a.** In an exemplary embodiment, the smoothed seismic image **104a** is generated in **104** using conventional methodologies for smoothing multi-dimensional data such as, for example, methodologies for the filtering of random noise from multi-dimensional data.

In an exemplary embodiment, the smoothed seismic image **104a** is then processed to determine edges within the smoothed seismic image in **106**. In an exemplary embodiment, the determination of edges within the smoothed seismic image **104a** is provided in **106** using conventional methodologies for determining edges in multi-dimensional data such as, for example, the Canny or Sobel edge detection methodologies. In an exemplary embodiment, the radius of curvature of the determined edges are then determined in **108**. In an exemplary embodiment, the radius of curvature determined in **108** is the iso-contour radius of curvature of the smoothed seismic image **104a.** The iso-contour radius of curvature of the determined edge refers to the radius of curvature of the edge determined in **106**.

In an exemplary embodiment, the method **100** then determines the points of high radius of curvature in the smoothed seismic image by determining, for each edge, whether or not the radius of curvature of the edge is less than or equal to a predetermined reference value $R(x,y)$ in **110.** If the radius of curvature of the edge is not less than or equal to the predetermined reference value $R(x,y)$, then the radius of curvature for the edge is rounded off to be equal to zero in **112.** If the last edge having a non-zero radius of curvature has been processed by **110** and **112,** then the determination of the points of high radius of curvature is ended in **114** and the method **100** then generates an image of the points of high radius of curvature **116a** in **116.**

In an exemplary embodiment, the method **100** then performs a windowed Radon transform for a range of angular directions on the image of the points of high radius of curvature **116a** in **118, 120,** and **122.** In an exemplary embodiment, the Radon transform utilized in **118** may be a conventional Radon transform. Alternatively, other similar transforms such as, for example, a Hough transform, may also be used in **118.** In an exemplary embodiment, the window size for the Radon, or equivalent, transform, in **118** may help to control errors in due to potential small misalignments and/or some level of curviness in the faults determined by the method **100.** In an exemplary embodiment, the window size used in the Radon, or equivalent, transform, in **118** should be set to be equal to a small multiple of the horizon spacing of the seismic image **102a.**

In an exemplary embodiment, the method **100** then determines the local maxima **124a** of the results of the Radon transform results generated in **118, 120,** and **122** in **124.** In an exemplary embodiment, the local maxima **124a** of the Radon transform results is associated with a corresponding angular direction **124b** and a fault line **124c** within the seismic image **102a** and the image of the points of high radius of curvature **116a.**

In an exemplary embodiment, the method **100** then maps the fault line **124c** onto the seismic image **102a** in **126.**

In an exemplary embodiment, the teachings of the method **100** may be applied to seismic images having *N*-dimensions.

In an exemplary embodiment, the method **100** may be used to determine one or more fault lines.

In an exemplary embodiment, in the method **100,** grouping algorithms may be used in combination with Radon and/or Hough transforms in order to enhance the determination of fault lines.

In an exemplary embodiment, in the method **100,** contextual geological may be used such as, for example, proximity to other geological structures and constraints on orientation based upon rock physics, may be used to enhance the determination of fault lines.

In an exemplary embodiment, the method **100** may be used to determine linear, non-linear, or curvilinear fault lines. In an exemplary embodiment, the determination of curvilinear faults lines by the method **100** may be enhanced by the use of grouping algorithms that generalize the Radon, or equivalent, transform. In an exemplary embodiment, such grouping algorithms search for smooth curves in scattered binary data.

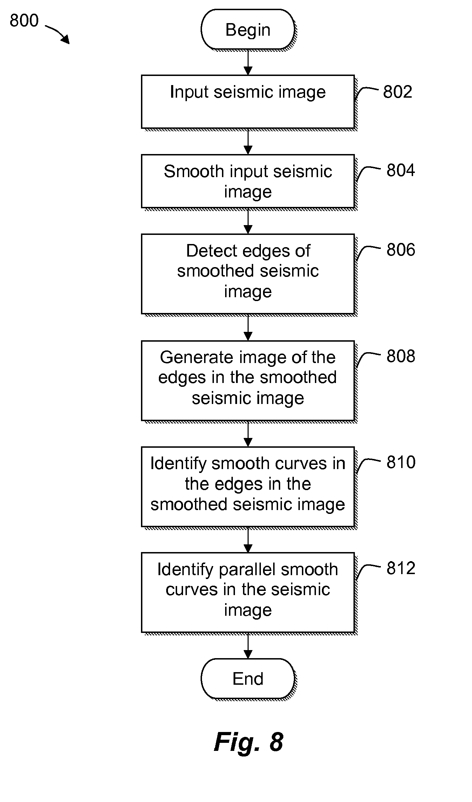

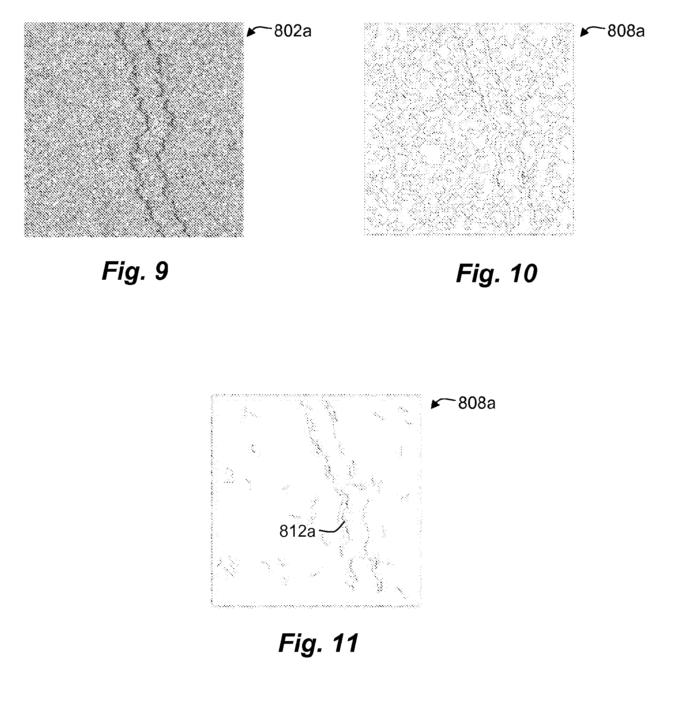

Referring now to Figs. 8, 9, 10 and 11, an exemplary embodiment of a method **800** of determining channels in seismic images is provided in which in **802** a seismic image **802a** is input.

In an exemplary embodiment, the method **800** then smooths the seismic image **802** in **804,** and detects edges in the smoothed seismic image in **806.** In an exemplary embodiment, the method **800** then generates an image **808a** of the edges in the smoothed seismic image in **808.**

In an exemplary embodiment, the method **800** then identifies smooth curves in the edges of the smoothed seismic image **808a** in **810.** In an exemplary embodiment, the method **800** then identifies parallel smooth curves **812a** in the smoothed seismic image **808a** in **812.** In an exemplary embodiment, the parallel smooth curves **812a** define channels in the smoothed seismic image **808a.**

In an exemplary embodiment, the teachings of the method **800** may be applied to seismic images having *N*-dimensions.

In an exemplary embodiment, the method **800** may be used to determine one or more channels.

In an exemplary embodiment, in the method **800,** grouping algorithms may be used in order to enhance the determination of channels.

In an exemplary embodiment, in the method **800,** contextual geological may be used such as, for example, proximity to other geological structures and constraints on orientation based upon rock physics, may be used to enhance the determination of channels.

In an exemplary embodiment, the method **800** may be used to determine linear, non-linear, or curvilinear channels. In an exemplary embodiment, the determination of curvilinear channels by the method **800** may be enhanced by the use of grouping algorithms. In an exemplary embodiment, such grouping algorithms search for smooth curves in scattered binary data.

In an exemplary embodiment, the smoothing operations, **104** and **804,** of the methods **100** and **800** may be implemented using one or more conventional techniques for reducing noise in an image. In an exemplary embodiment, the filtering provided in the smoothing operations, **104** and **804,** of the methods **100** and **800** may, for example, include specifying a window size, specifying a filter matrix of the specified window size that defines a local averaging technique, and performing a convolution for each pixel of the image. In an exemplary embodiment, the filtering provided in the smoothing operations, **104** and **804,** of the methods **100** and **800** may, for example, include anisotropic methods for smoothing the seismic images.

In an exemplary embodiment, the edge detection operations, **106** and **806,** of the methods, **100** and **800,** may, for example, include techniques for detecting discontinuities along spatial directions in an image. In an exemplary embodiment, such techniques for detecting discontinuities along spatial directions calculate the spatial derivatives of an image and search for sharp changes in the spatial derivatives. Examples of techniques for detecting discontinuities along spatial directions include the Sobel and Canny, the selection of which may depend upon the different continuous representations of the associated convolution operators.

In an exemplary embodiment, the determination of the radius of curvature operation **108** of the method **100** may be provided, for 2-dimensional images, using the following equation for determining the iso-contour curvature $R(x, y)$ of a 2-dimensional function $I(x,y)$ as follows:

$$R(x, y) = \left| \frac{\left(I_x^2 + I_y^2\right)^{3/2}}{I_{xx}I_y^2 + I_{yy}I_x^2 - 2I_xI_yI_{xy}} \right| \qquad (1)$$

where:

$$I_x \equiv \frac{\partial I}{\partial x};$$

$$I_y \equiv \frac{\partial I}{\partial y};$$

$$I_{xx} \equiv \frac{\partial^2 I}{\partial x \partial x};$$

$$I_{yy} \equiv \frac{\partial^2 I}{\partial y \partial y};$$

and

$$I_{xy} \equiv \frac{\partial^2 I}{\partial x \partial y}.$$

In an exemplary embodiment, the Radon transformation operation **118** of the method **100** provides a projection of the image intensity along straight lines in all possible directions and orientations. In an exemplary embodiment, other transformations that provide an indication of the image intensity in one or more spatial directions, may be used instead of, or in addition to the Radon transformation.

In an exemplary embodiment, one or more of the operations of the methods **100** and **800** include clustering and/or grouping operations in order to enhance the processing of the seismic images in order to determine non-linear and/or curvilinear faults and/or channels in the seismic images. In an exemplary embodiment, during the operation of the methods **100** and **800,** edge segments are obtained by segmentation algorithms that break up edges into edge segments. In an exemplary embodiment, grouping operations are included in the implementation of the methods **100** and **800** in order to group such edge segments into meaningful geometries. In an exemplary embodiment, the edge segments may be clustered into coherent groups. In this exemplary embodiment, the edge segments that are associated with the same cluster may indicate the presence of boundaries of a geological feature.

A method of determining the presence of one or more faults within a seismic image has been described that includes inputting a seismic image; smoothing the input seismic image; detecting edges in the smoothed seismic image; projecting an intensity of the edges in a plurality of spatial directions; determining a direction of maximum intensity of the projections of the edges; and for the directions of maximum intensity defining a fault line in the seismic image. In an exemplary embodiment, detecting edges in the smoothed seismic image comprises detecting edges having a radius of curvature greater than a predetermined value. In an exemplary embodiment, detecting edges in the smoothed seismic image comprises detecting edges having a radius of curvature less than or equal to a predetermined value. In an exemplary embodiment, detecting edges in the smoothed seismic image comprises detecting edges having a radius of curvature less than or equal to a predetermined value; and setting the radius of curvature of the edges having a radius of curvature less than or equal to a predetermined value equal to zero. In an exemplary embodiment, detecting edges in the smoothed seismic image comprises detecting edges having a radius of curvature greater than a predetermined value; detecting edges having a radius of curvature less than or equal to a predetermined value; and setting the radius of curvature of the edges having a radius of curvature less than or equal to a predetermined value equal to zero. In an exemplary embodiment, projecting an intensity of the edges in a plurality of spatial directions comprises performing a Radon transform on the seismic image. In an exemplary embodiment, determining a direction of maximum intensity of the projections of the edges comprises determining a local maxima of the Radon transform. In an exemplary embodiment, the fault line comprises a linear fault line. In an exemplary embodiment, the fault line comprises a non-linear fault line. In an exemplary embodiment, the fault line comprises a curvilinear fault line. In an exemplary embodiment, the method further comprises searching for smooth curves in the seismic image. In an exemplary embodiment, the seismic image comprises an n-dimensional image, where n is greater than or equal to 2. In an exemplary embodiment, smoothing the input seismic image comprises filtering noise from the input seismic image. In an exemplary embodiment, filtering noise from the input seismic image comprises specifying a filter window size; specifying a filter matrix; and performing a convolution for each pixel of the input seismic image. In an exemplary embodiment, filtering noise from the input seismic image comprises anisotropically filtering noise from the input seismic image. In an exemplary embodiment, detecting edges in the smoothed seismic image comprises calculating spatial derivatives in the smoothed seismic image. In an exemplary embodiment, detecting edges in the smoothed seismic image comprises determining a radius of curvature of edges within the smoothed seismic image. In an exemplary embodiment, determining a radius of curvature of edges within the smoothed seismic image comprises determining an iso-contour curvature of edges within the smoothed seismic image. In an exemplary embodiment, determining an iso-contour curvature of edges within the smoothed seismic image comprises determining an iso-contour curvature of edges $R(x,y)$ of a 2-dimensional function $I(x,y)$ within the smoothed seismic image using the following equation:

$$R(x, y) = \left| \frac{\left(I_x^2 + I_y^2\right)^{3/2}}{I_{xx}I_y^2 + I_{yy}I_x^2 - 2I_xI_yI_{xy}} \right|.$$

A method of determining the presence of one or more faults within a seismic image has been described that includes inputting a seismic image; smoothing the input seismic image; detecting edges in the smoothed seismic image; determining edges within the smoothed seismic image having a large radius of curvature; generating an image of the large radius of curvature edges; projecting an intensity of the image of the large radius of curvature edges in a plurality of spatial directions; determining a direction of maximum intensity of the projections of the image of the large radius of curvature edges; and for the directions of maximum intensity defining a fault line in the seismic image.

A method of determining the presence of one or more channels within a seismic image has been described that includes inputting a seismic image; smoothing the input seismic image; detecting edges in the smoothed seismic image; identifying smooth curves within the detected edges of the smoothed seismic image; identifying one or more sets of parallel smooth curves in the smoothed seismic image; and for the sets of parallel smooth curves defining one or more channels in the seismic image. In an exemplary embodiment, the channels comprise linear channels. In an exemplary embodiment, the channels comprise non-linear channels. In an exemplary embodiment, the channels comprise curvilinear channels. In an exemplary embodiment, the method further includes searching for smooth curves in the seismic image. In an exemplary embodiment, the seismic image comprises an n-dimensional image, where n is greater than or equal to 2. In an exemplary embodiment, smoothing the input seismic image comprises filtering noise from the input seismic image. In an exemplary embodiment, filtering noise from the input seismic image comprises specifying a filter window size; specifying a filter matrix; and performing a convolution for each pixel of the input seismic image. In an exemplary embodiment, filtering noise from the input seismic image comprises anisotropically filtering noise from the input seismic image. In an exemplary embodiment, detecting edges in the smoothed seismic image comprises calculating spatial derivatives in the smoothed seismic image.

It is understood that variations may be made in the foregoing without departing from the scope of the invention. Furthermore, the elements and teachings of the various illustrative embodiments may be combined in whole or in part in some or all of the illustrative embodiments. In addition, one or more of the elements and teachings of the various illustrative embodiments may be omitted, at least in part, and/or combined, at least in part, with one or more of the other elements and teachings of the various illustrative embodiments.

Although illustrative embodiments of the invention have been shown and described, a wide range of modification, changes and substitution is contemplated in the foregoing disclosure. In some instances, some features of the present invention may be employed without a corresponding use of the other features. Accordingly, it is appropriate that the appended claims be construed broadly and in a manner consistent with the scope of the invention.

**Claims**

1. A computer implemented method of determining the presence of one or more faults within a seismic image, comprising:

   inputting a seismic image;
   smoothing the input seismic image;
   detecting edges in the smoothed seismic image;
   projecting an intensity of the edges in a plurality of spatial directions;
   determining a direction of maximum intensity of the projections of the edges; and
   for the directions of maximum intensity defining a fault line in the seismic image.

2. The method of claim 1, wherein detecting edges in the smoothed seismic image comprises:

   detecting edges having a radius of curvature greater than a predetermined value.

3. The method of claim 1, wherein detecting edges in the smoothed seismic image comprises:

   detecting edges having a radius of curvature less than or equal to a predetermined value.

4. The method of claim 3, wherein detecting edges in the smoothed seismic image comprises:

   detecting edges having a radius of curvature less than or equal to a predetermined value; and
   setting the radius of curvature of the edges having a radius of curvature less than or equal to a predetermined value equal to zero.

5. The method of claim 1, wherein detecting edges in the smoothed seismic image comprises:

   detecting edges having a radius of curvature greater than a predetermined value;
   detecting edges having a radius of curvature less than or equal to a predetermined value; and
   setting the radius of curvature of the edges having a radius of curvature less than or equal to a predetermined value equal to zero.

6. The method of claim 1, wherein projecting an intensity of the edges in a plurality of spatial directions comprises:

   performing a Radon transform on the seismic image.

7. The method of claim 1, wherein detecting edges in the smoothed seismic image comprises:

   determining a radius of curvature of edges within the smoothed seismic image.

8. The method of claim 7, wherein determining a radius of curvature of edges within the smoothed seismic image comprises:

   determining an iso-contour curvature of edges within the smoothed seismic image.

9. A computer implemented method of determining the presence of one or more channels within a seismic image, comprising:

   inputting a seismic image;

smoothing the input seismic image;
detecting edges in the smoothed seismic image;
identifying smooth curves within the detected edges of the smoothed seismic image;
identifying one or more sets of parallel smooth curves in the smoothed seismic image; and
for the sets of parallel smooth curves defining one or more channels in the seismic image.

10. The method of claim 1 or 9, further comprising:

searching for smooth curves in the seismic image.

11. The method of claim 1 or claim 9, wherein the seismic image comprises an n-dimensional image, where n is greater than or equal to 2.

12. The method of claim 1 or claim 9, wherein smoothing the input seismic image comprises:

filtering noise from the input seismic image.

13. The method of claim 12, wherein filtering noise from the input seismic image comprises:

specifying a filter window size;
specifying a filter matrix; and
performing a convolution for each pixel of the input seismic image.

14. The method of claim 12, wherein filtering noise from the input seismic image comprises:

anisotropically filtering noise from the input seismic image.

15. The method of claim 1 or claim 9, wherein detecting edges in the smoothed seismic image comprises:

100

Begin

Input seismic image — 102

Smooth input seismic image — 104

Detect edges of smoothed seismic image — 106

Radius of curvature of edges of seismic image — 108

B

112 — Round off radius of curvature to zero

No

110 — Radius of curvature less than or equal to reference value?

Yes

A

*Fig. 1A*

**Fig. 1B**

←102a

*Fig. 2*

←104a

*Fig. 3*

←116a

*Fig. 4*

←116a

124c

*Fig. 5*

**Fig. 6**

**Fig. 7**

800

Begin

Input seismic image — 802

Smooth input seismic image — 804

Detect edges of smoothed seismic image — 806

Generate image of the edges in the smoothed seismic image — 808

Identify smooth curves in the edges in the smoothed seismic image — 810

Identify parallel smooth curves in the seismic image — 812

End

*Fig. 8*

**Fig. 9**

802a

**Fig. 10**

808a

**Fig. 11**

808a

812a

Europäisches
Patentamt

European
Patent Office

Office européen
des brevets

# EUROPEAN SEARCH REPORT

Application Number

EP 08 15 5475

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 960 371 A (SAITO NAOKI [US] ET AL) 28 September 1999 (1999-09-28) * column 1, line 5 - line 10 * * column 2, line 13 - line 24 * * column 4, line 63 - column 6, line 27 * ----- | 1,9 | INV. G01V1/28 G06K9/46 |
| X | AMINZADEH F ET AL.: "Pattern recognition & Image processing" 1987, GEOPHYSICAL PRESS , LONDON-AMSTERDAM , XP002499832 * page 66 - page 67 * * page 80 - page 81 * * page 345 - page 347 * ----- | 1,9 | |
| A | WO 00/16125 A (NORSKE STATS OLJESELSKAP [NO]; REES DAVID CHRISTOPHER [GB]; MELDAHL PA) 23 March 2000 (2000-03-23) * page 6, line 15 - page 7, line 24 * ----- | 1,9 | |
| A | WO 2004/038654 A (EXXONMOBIL UPSTREAM RES CO [US]; KIM CHUL-SUNG [US]; GILLARD DOMINIQUE) 6 May 2004 (2004-05-06) * abstract * ----- | 1,9 | TECHNICAL FIELDS SEARCHED (IPC) G01V G06K |
| A | ROHR K.: "Landmark-based image analysis" 2001, KLUWER ACADEMIC PUBLISHERS , XP002499833 * page 52 - page 54 * ----- | 1,9 | |

The present search report has been drawn up for all claims

| Place of search | Date of completion of the search | Examiner |
|---|---|---|
| The Hague | 27 October 2008 | Lorne, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 5475

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2008

| Patent document cited in search report | | Publication date | Patent family member(s) | | Publication date |
|---|---|---|---|---|---|
| US 5960371 | A | 28-09-1999 | NONE | | |
| WO 0016125 | A | 23-03-2000 | AT | 357001 T | 15-04-2007 |
| | | | AU | 762044 B2 | 19-06-2003 |
| | | | AU | 5874499 A | 03-04-2000 |
| | | | CA | 2343977 A1 | 23-03-2000 |
| | | | EP | 1110103 A1 | 27-06-2001 |
| | | | US | 6735526 B1 | 11-05-2004 |
| WO 2004038654 | A | 06-05-2004 | AU | 2003275021 A1 | 13-05-2004 |
| | | | EP | 1570423 A2 | 07-09-2005 |
| | | | US | 2007078604 A1 | 05-04-2007 |

EPO FORM P0459

For more details about this annex : see Official Journal of the European Patent Office, No. 12/82

**EP 2 113 793 A1**

**REFERENCES CITED IN THE DESCRIPTION**

**Patent documents cited in the description**

*   US 61008758 A